# EUROPÄISCHE PATENTANMELDUNG

(11) **EP 1 189 034 A1**
(43) Veröffentlichungstag der Anmeldung: **20.03.2002**
(21) Anmeldenummer: 01116475.3
(22) Anmeldetag: 06.07.2001
(51) Int. Cl.: G01D 5/245

(54) **Längenmessvorrichtung**

(30) Priorität: 07.07.2000 DE 20011703 U
(71) Anmelder: Elgo-Elektrik GmbH, 78239 Rielasingen-Worblingen (DE)
(72) Erfinder: Grimm, Helmut, 78262 Gailingen (DE)
(74) Vertreter: Hiebsch, Gerhard F., Dipl.-Ing.

(57) **Zusammenfassung**

Die Erfindung betrifft eine Längenmessvorrichtung mit einer langgestreckten, eine magnetische Längencodierung aufweisenden Trägereinheit (10) und einer relativ zu der Trägereinheit bewegbaren, an dieser längsverschieblich geführten Messschlitteneinheit (12), die zum Aufnehmen einer ersten mit der Längencodierung zusammenwirkenden magnetischen Sensoreinheit (24) ausgebildet und mit einer dieser nachgeschalteten elektronischen Auswerteeinheit verbindbar ist, wobei die Trägereinheit eine zusätzliche, parallel zu der Längencodierung verlaufende magnetische Spur (40) aufweist und die Messschlitteneinheit eine zum Zusammenwirken mit der zusätzlichen magnetischen Spur vorgesehene zusätzliche magnetische Sensoreinheit (32, 34; 36, 38) aufweist, wobei d'ie zusätzliche magnetische Spur beidends der magnetischen Längencodierung eine Endposition der Messschlitteneinheit relativ zur magnetischen Längencodierung markiert und die zusätzliche magnetische Sensoreinheit zum Erfassen der Endpositionen eingerichtet sowie zum Erzeugen eines entsprechenden Positionssignals beschaltet ist.

## Beschreibung

Die vorliegende Erfindung betrifft eine Längenmessvorrichtung nach dem Oberbegriff des Anspruches 1. Insbesondere betrifft die vorliegende Erfindung eine Längenmessvorrichtung, die mit einer Endabschaltung, nämlich einer Einrichtung zum Ausgeben eines elektrisch auswertbaren Signals für den Fall versehen ist, dass die Messschlitteneinheit der Längenmessvorrichtung ein Ende der Längencodierung erreicht und so die Möglichkeit bietet, eine mit der Längenmessvorrichtung versehende Maschine od.dgl. zu deaktivieren.

Eine gattungsgemäße Längenmessvorrichtung findet typischerweise Verwendung im Zusammenhang mit Holz- und/oder Blechbearbeitungsmaschinen und dient der Positionierung von Werkzeugen bzw. Bearbeitungsköpfen insbesondere bei numerisch gesteuerten bzw. vollautomatisch betriebenen Werkzeugmaschinen und Bearbeitungszentren. Durch die mit einer vorbestimmten Maßteilung versehene Längencodierung und deren (berührungsloser) Abtastung durch die magnetische Sensoreinheit kann so in ansonsten bekannter Weise eine zuverlässige, praktisch verschleissfreie und präzise Längenmessung durchgeführt werden, die einen ordnungsgemäßen Steuerungsbetrieb der mit der Längenmessvorrichtung versehenen Anlage gestattet.

Insbesondere zur Vermeidung von Maschinen-Fehlfunktionen, wie sie typischerweise durch den Ausfall von Komponenten, Fehlbedienung oder Fehlprogrammierung auftreten, hat es sich jedoch als nützlich herausgestellt, bekannte Längenmessvorrichtungen zum Einsatz in Werkzeugmaschinen oder Bearbeitungszentren mit einer Endabschaltung zu versehen, die nämlich insbesondere für den Fall, dass ein Bearbeitungskopf oder -werkzeug eine kritische Endposition erreicht, den Antrieb oder das Bearbeitungswerkzeug abschaltet, um Beschädigungen zu vermeiden.

Typischerweise wird bei bekannten Lösungen aus dem Stand der Technik eine derartige Endabschaltung mit Hilfe von mechanisch wirksamen Schaltern oder Tastern realisiert, die als Reaktion auf Kontakt, z.B. durch die Messschlitteneinheit, eine kritische Endposition feststellen und so die Maschine deaktivieren, um sie vor Beschädigung zu schützen.

Ein Problem derartiger Schutzmechanismen liegt jedoch darin, dass gerade bei schnellen Bearbeitungs- und Vorschubgeschwindigkeiten, wie sie typisch bei modernen Bearbeitungszentren sind, eine genaue Justierung derartiger mechanischer Schalter aufwendig, fehler- und störanfällig ist, und zudem oftmals die (mechanisch bedingte) Schaltzeit zu lang ist, um noch wirksam in den Maschinenbetrieb eingreifen zu können.

Aufgabe der vorliegenden Erfindung ist es daher, eine Endabschaltung bei mit einer gattungsgemäßen Längemessvorrichtung versehenen Funktionseinheiten, wie etwa Werkzeugmaschinen oder Bearbeitungszentren, zu verbessern, insbesondere das Erzeugen eines eine kritische Endposition anzeigenden Signals zu beschleunigen und zuverlässiger zu gestalten, und etwaigen Einstellungs- und Justieraufwand bei Montage und Einrichtung zu minimieren.

Die Aufgabe wird durch die Längenmessvorrichtung mit den Merkmalen des Anspruches 1 gelöst; vorteilhafte Weiterbildungen der Erfindung sind in den Unteransprüchen beschrieben.

In erfindungsgemäß vorteilhafter Weise nutzt die Längenmessvorrichtung die zusätzliche magnetische Spur in der ohnehin zum Aufnehmen der Längencodierung vorgesehenen Trägereinheit, um beidends der magnetischen Längencodierung die (für den Schutz vor Fehlfunktionen kritische) Endposition zu ermitteln. Da diese Positionserfassung mit magnetischen Mitteln erfolgt, ist sie nicht nur praktisch verschleissfrei (und damit wartungsarm), sondern obendrein äußerst reaktionsschnell, erzeugt unmittelbar ein für die elektronische Weiterverarbeitung geeignetes Signal und erlaubt eine äußerst genaue und feinfühlige Positionserfassung, frei von mechanischen Toleranzen oder Spiel.

Dabei hat es sich als besonders bevorzugte Realisierungsform der Erfindung herausgestellt, die zur Endpositionserfassung vorgesehene zusätzliche magnetische Spur als durchgehend magnetische Spur (Band) zu realisieren, und lediglich digital das Spurende zur Endpositionserfassung zu erkennen und auszuwerten, mit anderen Worten, in messtechnisch und auswertungstechnisch besonders einfacher Weise (günstig für kritische Betriebszustände) wird erfindungsgemäß lediglich erfasst, ob sich die zu diesem Zweck vorgesehene zusätzliche magnetische Sensoreinheit noch oberhalb der zusätzlichen magnetischen Spur befindet, oder aber ob die Sensoreinheit (bereits) außerhalb derselben steht, was einen kritischen Endzustand markieren würde.

In einer besonders bevorzugten, weiteren Ausführungsform ist zudem die erfindungsgemäße zusätzliche magnetische Sensoreinheit als Paar von Magnetfeldsensoren realisiert, die, in der Richtung einer Vorschubbewegung längs der Längencodierung, einen vorbestimmten Abstand voneinander vorgesehen sind, so dass ein differenziertes Endsignal, abhängig von den jeweiligen Signalzuständen der beiden des Paares von Magnetfeldsensoren, erzeugt und ausgewertet werden kann. Konkret bietet es sich an, festzustellen, ob (erst) einer des Paares von Magnetfeldsensoren außerhalb der zusätzlichen Magnetspur steht, welches als erste Endposition, die in einem konkreten Anwendungsfall noch nicht kritisch sein kann, auszuwerten wäre, während ein Erfassen beider des Paares von Magnetfeldsensoren außerhalb der zusätzlichen magnetischen Spur einen kritischen Endzustand markieren würde, welcher das sofortige Deaktivieren der Anlage bedeuten könnte. Auf diese Weise läßt sich die Sicherung bzw. Steuerung der mit der erfindungsgemäßen Längenmessvorrichtung versehenen Maschine deutlich verbessern, insbesondere im Hinblick auf das Vermeiden abrupter Betriebsunterbrechungen (so könnte etwa bereits die erste, d.h. lediglich durch einen Sensor des Paares erfasste Endposition, ein Abbremsen eines mit der Längenmessvorrichtung erfassten Werkzeuges auslösen, während ein vollständiges Abschalten erst durch die zweite, vollständige Endposition ausgelöst wird).

In besonders geeigneter Weise findet die vorliegende Erfindung zudem ihren Einsatz in Messumgebungen, bei welchen die Längencodierung nicht absolut vorgenommen ist, sondern lediglich in Form von regelmäßigen periodischen Magnetisierungen vorliegt. Hier bietet es sich dann an, die erfindungsgemäße Trägereinheit mit einer weiteren (der dritten) Spur zu versehen, die eine Referenzpositionsmarkierung zum Eichen bzw. Feststellen einer Ausgangsposition für die relativ zu dieser Position vorgenommene Längenmessung anbietet.

In mechanisch besonders günstiger Weise wird die vorliegende Erfindung mittels einer Führungsschiene realisiert, die zum Aufnehmen der erfindungsgemäß vorgesehenen Mehrzahl von magnetischen Spuren geeignet profiliert ist, und die weiter bevorzugt eine unsymmetrische Querschnittsform aufweist, mit dem Zweck, eine eindeutige Führungsposition der aufsitzenden Messschlitteneinheit vorzugeben und mithin ein Verdrehen (Vertauschen der Bewegungsrichtung) der Messschlitteneinheit zu verhindern.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1:: eine perspektivische Ansicht der Längenmessvorrichtung gemäß einer ersten, bevorzugten Ausführungsform der vorliegenden Erfindung mit einer als Führungsprofil realisierten Trägereinheit und insgesamt drei magnetischen Spuren;
- Fig. 2:: eine Schnittansicht durch die Anordnung gemäß Fig. 1 mit schematisch eingezeichneter Fase zur eindeutigen Positionsbestimmung des Führungsschlittens;
- Fig. 3:: eine Seitenansicht der Anordnung gemäß Fig. 1;
- Fig. 4:: eine schematische Draufsicht auf die Anordnung gemäß Fig. 1 mit einer Relativanordnung der in der Messschlitteneinheit angeordneten Sensoreinheiten relativ zueinander und relativ zu den magnetischen Spuren in der Trägereinheit;
- Fig. 5:: eine schematische Ansicht einer ersten signalbildenden Endposition der Ausführungsform gemäß Fig. 1 und
- Fig. 6:: eine Ansicht entsprechend Fig. 5 mit einer zweiten Endposition.

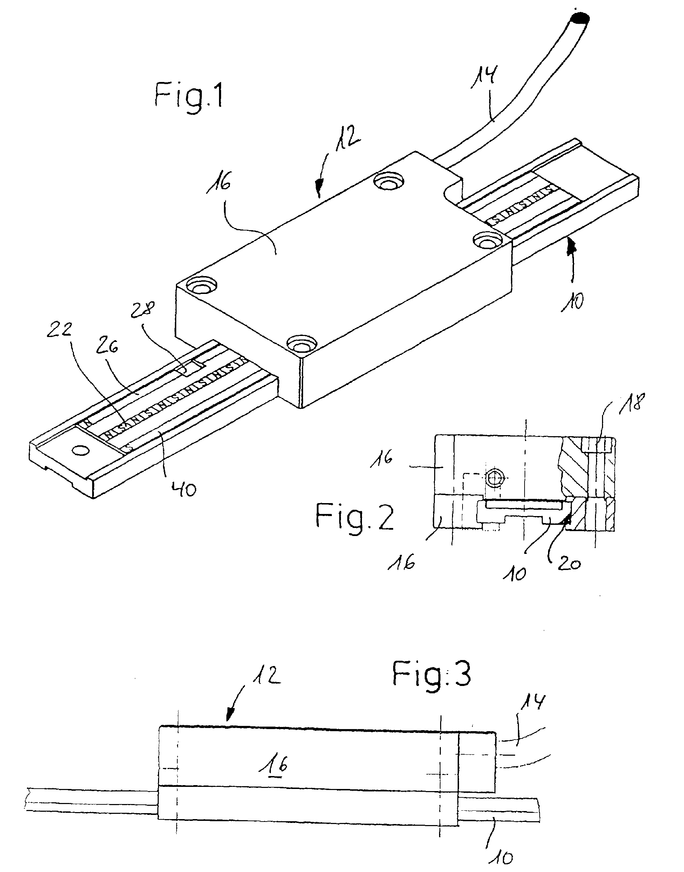

Eine als Aluminiumprofil realisierte Führungsschiene 10 einer typischen Breite von 25 mm ist in ansonsten bekannter Weise an einer Werkzeugmaschine oder einem Bearbeitungszentrum befestigt, mit dem Zweck, eine Relativposition zu einem mit der Schiene 10 zusammenwirkenden Führungsschlitten 12 zu erfassen und der elektronischen Auswertung zugänglich zu machen. Der in der Fig. 1 gezeigte Führungsschlitten 12 ist in ansonsten bekannter Weise typischerweise mit einem Bearbeitungskopf, einer Vorschubeinheit od.dgl. verbunden und weist nachfolgend noch im Detail zu erläuternde Magnetfeldsensoren auf, die in ansonsten bekannter Weise als Hall-Sensoren od.dgl. realisiert sind und über ein Kabel 14 mit ihren jeweiligen Messsignalen von einer (in den Zeichnungen nicht gezeigten) nachgeschalteten Auswerteelektronik ausgewertet werden können.

Wie in Fig. 2 und 3 gezeigt, ist auf der Führungsschiene 10 ein von Befestigungsmitteln (Schrauben) 18 zusammengehaltenes mehrteiliges Gehäuse 16 gleitend geführt, wobei eine an der Schiene vorgesehen Fasierung 20 (Fig. 2) für einen eindeutigen Sitz des Schlittengehäuses 16 auf der Schiene 10 sorgt.

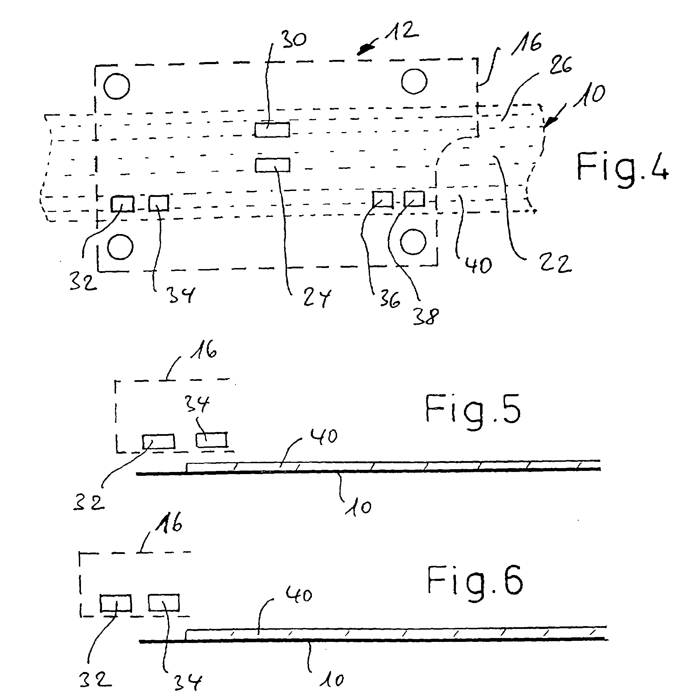

Die Fig. 4 als Draufsicht auf die Anordnung der Fig. 1 (schematisch ist der Umriss des Gehäuses 16 sowie die Führungsschiene 10 mit einzelnen magnetischen Spuren 22, 24, 26 gezeigt) verdeutlicht das Zusammenwirken von in dem Führungsschlitten enthaltenen Sensoren mit den drei magnetischen Spuren der Führungsschiene: Eine mittlere Messspur 22, die, wie in der Fig. 1 erkennbar ist, mit einer konstanten Periode von wechselnden magnetischen Abschnitten magnetisiert ist, dient der eigentlichen Längen- und Positionsbestimmung des Führungsschlittens 12 relativ zur Führungsschiene 10 und wird von einem mittleren Abtastsensor 24 als Magnetfeldsensor abgetastet. Bei der Bewegung des Führungsschlittens 12 ergibt sich so ein Wechselsignal, welches zur elektronischen Bewegungs- und Positionsbestimmung auswertbar ist. Da es sich hierbei jedoch um ein Relativsignal handelt, welches nur eine inkrementale Positionsbestimmung ermöglicht, ist in einer zur Messspur 22 parallel vorgesehenen magnetischen Referenzspur 26 eine (im vorliegenden Ausführungsbeispiel durch Einkerben oder Ausschneiden realisierte) Referenzmarkierung 28 vorgesehen, welche von einem entsprechend positionierten Referenzsensor 30 im Führungsschlitten 12 abgetastet wird und inbesondere das Setzen einer definierten Anfangs- bzw. Nullposition (Referenzposition) für den Beginn der inkrementalen Längenmessung ermöglicht. Eine derartige Referenzmarkierung eignet sich dabei nicht nur für das periodische Eichen bzw. Rücksetzen der Längenerfassung, auch ist nach einem Stromausfall od.dgl. Betriebsfehler eine solche Markierung notwendig, um wiederum eine eindeutige Positionsfeststellung des Führungsschlittens 12 vornehmen zu können.

Im Rahmen der vorliegenden Erfindung erfolgt eine Bestimmung einer Endposition des Führungsschlittens 12 durch Zusammenwirken von zwei Paaren von Endschaltesensoren 32, 34 bzw. 36, 38 mit einer speziell für die Endpositionsbestimmung vorgesehenen Endpositionsspur 40 auf der Führungsschiene 10, welche parallel zu den Spuren 22, 26 verläuft. Die Endpositionsspur 40 ist im Gegensatz zu den anderen Spuren jedoch durchgehend magnetisiert und so gebildet, dass ihre jeweiligen Enden beidseits des langgestreckten Magnetbandes 40 durch die Endschaltersensoren 32, 34 bzw. 36, 38 erfasst werden können.

Dies wird anhand der Fig. 5 und 6 erläutert, welche zwei bevorzugt getrennt auswertbare Endpositionen angeben: Die Fig. 5 zeigt, wie der erste, bezogen auf das Schlittengehäsue 16 außenliegende Endschaltersensor 32 (des in der Draufsicht der Fig. 4 linksseitigen Paares) bereits außerhalb der Endpositionsspur 34 steht, während der innenliegende Endschaltersensor 34 noch mit der magnetischen Endpositionsspur 40 zusammenwirkt. Somit zeigt die Fig. 5 eine erste Endposition, während die Fig. 6 (hier liegen beide Sensoren 34, 32 außerhalb des Bereichs der Endpositionsspur 40) eine zweite Endposition markiert.

In besonders vorteilhafter Weise erlaubt es diese Ausführungsform daher, eine gestufte, differenzierte Auswertung der Endposition vorzunehmen, was sich insbesondere bei hohen Vorschubgeschwindigkeiten und/oder schwierigen Abschaltbedingungen als nützlich erweisen dürfte.

Die vorliegende Erfindung ist nicht auf die beschriebenen Ausführungsformen beschränkt; so ist es insbesondere auch möglich, die Anordnung und/oder Ausbildung der einzelnen gezeigten Spuren und Sensoranordnungen relativ zu diesen zu variieren. Besonders geeignet bietet es sich zudem an, den in den Fig. 5 bzw. 6 erkennbaren Abstand zwischen den jeweiligen der Endschaltersensor-Paare geeignet zu wählen (ein typisches Maß liegt bei etwa 4 bis 6 mm), da dadurch auch bereits eine Anpassung an die jeweiligen Abschaltbedingungen möglich ist.

Die Auswertung von den jeweiligen Sensoren erzeugten Signale erfolgt in ansonsten bekannter Weise, typischerweise mit Hilfe von geeigneten Prozessoren. Eine besonders bevorzugte Ausführungsform sieht dabei vor, dass die Endschaltersensoren 32 bis 38 nicht über eine entsprechende Prozessorlogik ausgewertet werden, sondern diese vielmehr unmittelbar ein Schaltsignal erzeugen, welches praktisch verzögerungslos dann eine (Not-) Abschaltung von gefährdeten Aggregaten vornehmen kann.

## Patentansprüche

1. Längenmessvorrichtung mit
einer langgestreckten, eine magnetische Längencodierung (22) aufweisenden Trägereinheit (10)
und einer relativ zu der Trägereinheit bewegbaren, an dieser längsverschieblich geführten Messschlitteneinheit (12), die zum Aufnehmen einer ersten mit der Längencodierung zusammenwirkenden magnetischen Sensoreinheit (24) ausgebildet und mit einer dieser nachgeschalteten elektronischen Auswerteeinheit verbindbar ist,
wobei die Trägereinheit eine zusätzliche, parallel zu der Längencodierung verlaufende magnetische Spur (40) aufweist und
die Messschlitteneinheit eine zum Zusammenwirken mit der zusätzlichen magnetischen Spur vorgesehene zusätzliche magnetische Sensoreinheit (32, 34; 36, 38) aufweist,
**dadurch gekennzeichnet, dass**
die zusätzliche magnetische Spur beidends der magnetischen Längencodierung eine Endposition der Messschlitteneinheit relativ zur magnetischen Längencodierung markiert
und die zusätzliche magnetische Sensoreinheit zum Erfassen der Endpositionen eingerichtet sowie zum Erzeugen eines entsprechenden Positionssignals beschaltet ist.

2. Vorrichtung nach Anspruch 1, **dadurch gekennzeichnet, dass** die Längencodierung als magnetische Spur mit einer in Längsrichtung periodisch wechselnden Codierung und die zusätzliche magnetische Spur als durchgehend homogen magnetisierte Spur (40) parallel dazu ausgebildet ist, die mit ihren Enden die Endpositionen markiert.

3. Vorrichtung nach Anspruch 1 oder 2, **dadurch gekennzeichnet, dass** die zusätzliche magnetische Sensoreinheit einen Magnetfeldsensor aufweist, dessen Sensorausgangssignal mit Mitteln zum Erfassen der Enden der zusätzlichen magnetischen Spur verbunden ist.

4. Vorrichtung nach einem der Ansprüche 1 bis 3, **dadurch gekennzeichnet, dass** die zusätzliche magnetische Sensoreinheit ein Paar von Magnetfeldsensoren (32, 34; 36, 38) aufweist, die einen vorbestimmten Abstand voneinander beabstandet sind und zum Ausgeben eines ersten sowie eines zweiten Endsignals, abhängig von der Position eines jeweiligen des Paares von Magnetfeldsensoren, relativ zu einem Ende der zusätzlichen magnetischen Spur, beschaltet sind.

5. Vorrichtung nach Anspruch 4, **dadurch gekennzeichnet, dass** die Längenmessvorrichtung zum Ausgeben des ersten Endsignals beschaltet ist, wenn ein erster (32) des Paares von Magnetfeldsensoren jenseits des Endes der zusätzlichen magnetischen Spur positioniert ist, während der zweite (34) des Paares von Magnetfeldsensoren vor dem Ende des der zusätzlichen magnetischen Spur zum Zusammenwirken mit dieser positioniert ist
und zum Ausgeben des zweiten Endsignals beschaltet ist, wenn beide des Paares von Magnetfeldsensoren jenseits des Endes der zusätzlichen magnetischen Spur positioniert sind.

6. Vorrichtung nach einem der Ansprüche 1 bis 5, **dadurch gekennzeichnet, dass** die Trägereinheit eine dritte, parallel zu der Längencodierung verlaufende Spur (26) aufweist, die eine zum Zusammenwirken mit einem Referenzsensor (30) in der Messschlitteneinheit gebildete Referenzpositionsmarkierung (28) aufweist.

7. Vorrichtung nach Anspruch 6, **dadurch gekennzeichnet, dass** die dritte Spur eine durchgehend homogen magnetisierte Spur ist und die Referenzpositionsmarkierung als abschnittsweise(r) Ausschnitt und/oder Ausstanzung aus der dritten Spur realisiert ist.

8. Vorrichtung nach Anspruch 6 oder 7, **dadurch gekennzeichnet, dass** auf der Trägereinheit die dritte Spur und die zusätzliche magnetische Spur beidseits der magnetischen Längencodierung verlaufen.

9. Vorrichtung nach einem der Ansprüche 1 bis 8, **dadurch gekennzeichnet, dass** die Trägereinheit als querschnittlich profilierte Führungsschiene (10) realisiert ist und das Querschnittsprofil der Führungsschiene, bezogen auf eine Mittelachse, unsymmetrisch gebildet ist.

10. Vorrichtung nach Anspruch 9, **dadurch gekennzeichnet, dass** die Unsymmetrie in der Führungsschiene durch eine Fase (20) im Bereich einer Seitenkante der Führungsschiene realisiert ist.
